# EUROPÄISCHE PATENTANMELDUNG

(11) **EP 3 032 714 A1**
(43) Veröffentlichungstag der Anmeldung: **15.06.2016**
(21) Anmeldenummer: 14196967.5
(22) Anmeldetag: 09.12.2014
(51) Int. Cl.: H02K 11/00, H02K 3/50

(54) **Dynamoelektrische Maschine mit einem Meldesystem zur Kurzschlusserkennung im Wicklungssystem**

(71) Anmelder: Siemens Aktiengesellschaft, 80333 München (DE)
(72) Erfinder: Köhler, Marco, 91217 Hersbruck (DE); Adam, Christoph, 90411 Nürnberg (DE); Steffani, Hans Friedrich, 90480 Nürnberg (DE); Volk, Bernhard, 90451 Nürnberg (DE)

(57) **Zusammenfassung**

Die Erfindung betrifft eine dynamoelektrische Maschine (1) mit einem Statorblechpaket (3) und einem Rotorblechpaket (4), wobei das Statorblechpaket(3) und/oder das Rotorblechpaket (4) jeweils ein oder mehrere Wicklungssysteme aufweist, das an den jeweiligen Stirnseiten des Statorblechpakets (3) und/oder des Rotorblechpakets (4) einen Wickelkopf (8,9) ausbildet, wobei im Wicklungssystem, insbesondere im oder am Wickelkopf (8,9) zumindest eine Meldeleitung (10) vorgesehen ist, um Wicklungskurzschlüsse zu erfassen.

## Beschreibung

Die Erfindung betrifft eine dynamoelektrische Maschine mit einem Statorblechpaket und einem Rotorblechpaket und einem oder mehreren Wicklungssystemen.

Dynamoelektrische Maschinen weisen an den Stirnseiten des Statorblechpakets und/oder Rotorblechpakets aufgrund des in der Regel in Nuten eines Blechpakets angeordneten Wicklungssystems Wickelköpfe auf. Diese Wickelköpfe ergeben sich durch die Umlenkung der elektrischen Leiter des Wicklungssystems an den Stirnseiten des Statorblechpakets und/oder Rotorblechpakets. Vor allem im Bereich der Wickelköpfe stehen die elektrischen Leiter mit elektrischen Leitern benachbarter elektrischer Phasen über die Isolierung in Kontakt. Durch Isolationsfehler, beispielsweise verursacht durch Übertemperaturen oder Überspannungen kann diese Isolation beschädigt werden und es tritt ein Wicklungskurzschluss im Wickelkopf und/oder Nutbereich ein.

Die aus dem Wicklungskurzschluss resultierende Wärme- und/oder Rauchentwicklung ebenso wie ein weiter anstehendes Drehmoment des Motors kann eine mögliche Gefahr für das Bedienpersonal oder die dynamoelektrische Maschine darstellen. Deswegen muss ein Wicklungskurzschluss zeitig erkannt werden, um gegebenenfalls geeignete Maßnahmen einleiten zu können.

Beispielsweise wird bei elektrisch angetriebenen Fahrzeugen mit mehreren Elektromotoren das Fahrzeug weiter betrieben, auch wenn bei einem Antrieb bzw. Motor ein Defekt vorliegt. Dabei wird in der Regel der defekte Motor von der Energieversorgung getrennt. Liegt bei dem defekten Motor ein Wicklungskurzschluss vor, so wird durch die Geschwindigkeit des Fahrzeugs bzw. der damit vorhandenen Drehzahl des defekten Motors, weiterhin elektrische Energie generatorisch in die Fehlerstelle gespeist. Durch die Trennung von der elektrischen Versorgung ist aber eine Erkennung bzw. Auffindung eines Wicklungskurzschlusses erschwert. Ein erkannter Wicklungskurzschluss kann je nach Schwere der möglichen Fehlerfolgen erhebliche Auswirkungen auf der Betriebsführung derartiger Fahrzeuge aufweisen.

Unter Umständen ist dabei eine Reduzierung der Geschwindigkeit oder gar eine Stilllegung dieses Fahrzeugs angebracht. Ein Erkennen von Wicklungskurzschlüssen muss daher sehr zuverlässig sein, vor allem darf es zu keinen Fehlauslösungen kommen. Auch sollten nur schwere Wicklungskurzschlüsse mit kritischen Auswirkungen erkannt werden, um den Fahrbetrieb nicht zu stören.

Folgende Verfahren sind bisher zur Erkennung von Wicklungskurzschlüssen bekannt. Der Einsatz von Temperatursensoren beinhaltet den Nachteil, dass der Wicklungskurzschluss sich in direkter Nähe des Sensors stattfindet muss. Wird der Motor vergleichsweise gut gekühlt, wird ggf. ein Wicklungskurzschluss über Temperatursensoren nicht erkannt.

Ebenfalls ist eine Diagnose über die Umrichterströme möglich, dabei wird die Erdschlusserkennung oder Unsymmetrie der Motorströme von der Steuerungssoftware des Umrichters erkannt und es wird auf einen Wicklungskurzschluss geschlossen.

Nachteilig dabei ist, dass bei diesem Schutzkonzept der Umrichter sich bei einem Motorfehler vom Motor trennt. Wenn jedoch der Umrichter vom Motor getrennt ist, kann ein Wicklungskurzschluss des Motors nicht mehr durch die Steuerungssoftware erkannt werden.

Ausgehend davon liegt der Erfindung die Aufgabe zugrunde, eine dynamoelektrische Maschine vorzusehen, die ein Meldesystem aufweist, das zuverlässig Wicklungskurzschlüsse erkennt. Dabei soll auch das Antriebssystem, in das die dynamoelektrische Maschine eingesetzt ist, überwacht werden.

Die Lösung der gestellten Aufgabe gelingt durch eine dynamoelektrische Maschine mit einem Statorblechpaket und einem Rotorblechpaket, wobei das Statorblechpaket und/oder das Rotorblechpaket jeweils ein oder mehrere Wicklungssysteme aufweist, das an den jeweiligen Stirnseiten des Statorblechpakets und/oder des Rotorblechpakets einen Wickelkopf ausbildet, wobei im Wicklungssystem, insbesondere im oder am Wickelkopf zumindest eine Meldeleitung vorgesehen ist, um Wicklungskurzschlüsse zu erfassen.

Die Lösung der gestellten Aufgabe gelingt ebenso durch ein Antriebssystem mit zumindest einem Umrichter und zumindest einer dynamoelektrischen Maschine, wobei die Meldeleitung in den Umrichter geführt ist, und dort in ein Auswertesystem integriert ist.

Alternativ dazu kann das Auswertesystem elektrisch und/oder räumlich auch separat bzgl. der dynamoelektrischen Maschine und/oder dem Umrichter angeordnet sein.

Die Lösung der gestellten Aufgabe gelingt auch durch ein elektrisch angetriebenes Fahrzeug mit zumindest einem Antriebssystem.

Erfindungsgemäß wird eine Meldeleitung z.B. ein Kabel mit zwei verdrillten und voneinander isolierten Drähten eingesetzt. An den Enden der Leitung ist vorzugsweise ein definierter Abschlusswiderstand angebracht. Dies erleichtert die Wicklungsschlusserkennung und erleichtert eine räumliche Ortung des Wicklungsschlusses.

Die Meldeleitung ist dabei vorzugsweise am Wickelkopf des Stators und/oder am Wickelkopf des Rotors vorgesehen, da dort die einzelnen Phasen übereinander oder gekreuzt angeordnet sind und somit die Isolation einer dementsprechenden Spannungsbeanspruchung ausgesetzt ist. Die Meldeleitung kann aber auch im oder am Wicklungssystem in einer oder mehreren Nuten des jeweiligen Blechpakets verlaufen, um eine ganzheitliche

Überwachung der dynamoelektrischen Maschine auf Wicklungskurzschlüsse zu ermöglichen.

In einer anderen Ausführung der Erfindung ist die Meldeleitung als Koaxialkabel ausgeführt, wobei sich ein Innenleiter in einem hohlzylindrischen Außenleiter befindet und sich zwischen Innen- und Außenleiter optional ebenfalls ein Abschlusswiderstand vorgesehen ist. Dabei befindet sich zwischen Innen- und Außenleiter dieses Koaxialkabels eine temperaturempfindliche Isolation.

Ein Wicklungskurzschluss wird, wie bei der Ausführung der Meldeleitung mit verdrillter Leitung entweder durch elektrischen Kontakt zwischen Innen- und Außenleiter hergestellt oder durch Auftrennen beider Leiter erkannt.

Das Messverfahren während des Betriebs der dynamoelektrischen Maschine oder zu Wartungszwecken und die jeweilige Auswertung der aufgenommenen Daten kann auch mit Messsignalen höherer Frequenz - also bis in den Bereich von einigen Kilohertz (KHz) erfolgen.

Alternativ sind zu den bestehenden Lösungen sind auch unisolierte Meldeleitungen im Wicklungssystem denkbar, deren Leiter aus Metallen mit niedrigem Schmelzpunkt wie Zink oder Blei hergestellt sind. Damit ist man nicht auf das Schmelzen einer Isolation angewiesen. Ein derartiger Meldedraht z.B. aus Blei würde bei 327°C schmelzen und ein Wicklungskurzschluss durch Auftrennen dieses Drahtes anzeigen. Diese unisolierten Meldeleitungen werden im Wicklungssystem, insbesondere im Wicklungskopf so angeordnet bzw. verlegt, dass zwischen diesen Leitungen kein direkter Kontakt und damit die Gefahr eines Kurzschlusses zwischen den einzelnen Meldeleitungen besteht.

Bei allen oben aufgeführten Ausführungsformen liegt vorteilhafterweise ein Abschmelzen der Isolation bzw. des Drahtes zirka 30 Kelvin über der jeweiligen Temperaturklasse der dynamoelektrischen Maschine, um den ordnungsgemäßen Betrieb der Maschine nicht mit Fehlauslösungen zu gefährden.

Damit sind nunmehr Störungen und Fehlauslösungen von Temperaturüberhöhungen ausgeschlossen und es kann sich - falls diese Meldung abgesetzt wird - lediglich um einen Wicklungskurzschluss handeln.

Weiterhin sind Ausführungen denkbar, die die Meldeleitung bzw. Meldeleitungen bereits in das Leistungskabel integrieren, das den Umrichter mit der dynamoelektrischen Maschine verbindet. Die Auswertung des Zustands der Meldeleitung erfolgt dann durch geeignete Testsignale des Umrichters. Die Signale können sowohl bei Fahrt wie auch im Stillstand eines Fahrzeugs erzeugt und ausgewertet werden. Im Stillstand kann dabei die dynamoelektrische Maschine wieder kurzzeitig mit dem Umrichter verbunden sein.

In einer weiteren Ausführungsform sind derartige Messungen auch direkt an der dynamoelektrischen Maschine möglich, indem dort ergänzend Messbuchsen vorgesehen sind über die die Messungen auch während des Betriebes der dynamoelektrischen Maschine durchführbar sind.

Vorteilhafterweise findet durch ortsabhängig angeordnete Widerstände in der Meldeleitung eine lokale Zuordnung eines Fehlers im Bereich der dynamoelektrischen Maschine statt. Beispielsweise kann damit festgestellt werden, ob ein Wicklungskurzschluss in der Nut, im Wickelkopf, wo im Wickelkopf etc. vorliegt.

Ebenso werden damit Fehler auch in der Zuleitung zur Auswertung erkannt. Ein Ansprechen der Meldeleitung erfolgt erst, wenn eine ausreichend hohe Wärmeentwicklung im Wickelkopf erfolgt und dies zu einem Schmelzen der Isolation bzw. des Drahtes führt. Dadurch werden schwere Wicklungskurzschlüsse, die zu Betriebsbeeinträchtigungen führen, erkannt. Durch die Ortsabhängigkeit des Ansprechens der Meldeleitung kann die zum Wicklungskurzschluss führende Erwärmung in dem Wicklungssystem, insbesondere in den Wickelköpfen am kompletten Umfang und/der axialen Länge des Wicklungssystems der dynamoelektrischen Maschine erkannt werden.

Es ist somit eine Eingrenzung eines Fehlerortes möglich und erfindungsgemäß findet eine einfache Integration in die vorhandenen Schutzfunktionen des Antriebssystems statt. Es sind keine aufwändigen Algorithmen z.B. Temperaturmodelle der dynamoelektrischen Maschine insbesondere für das Wicklungssystem notwendig, die die Realität leider nur unzureichend darstellen können.

Im Vergleich zu Brandschutzleitungen wird erfindungsgemäß mit der Meldeleitung der Wicklungskurzschluss und damit eine Zerstörung des Wickelkopfes durch einen schweren Wicklungskurzschluss vorab sicher erkannt. Brandschutzleitungen hingegen werden vor allem in anderen Komponenten eines elektrischen Fahrzeugs zur Erkennung von Bränden eingesetzt. Auch ist in der Regel die Isolation der Brandschutzleitung für die Hochspannungen im Motor nicht geeignet.

Die Erfindung sowie vorteilhafte Ausgestaltungen der Erfindung werden anhand nachfolgender Ausführungsbeispiele näher erläutert. Darin zeigen:
- FIG 1: einen Teillängsschnitt einer dynamoelektrischen Maschine,
- FIG 2: eine Anwendung eines Antriebssystems bei Loks,
- FIG 3, 4: eine Meldeleitung.

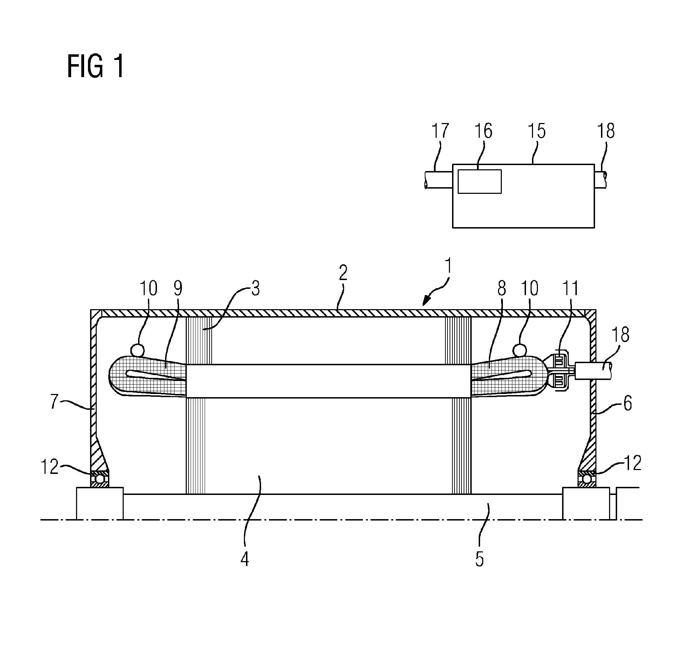

FIG 1 zeigt einen abschnittsweisen Längsschnitt einer dynamoelektrischen Maschine 1, die in einem Gehäuse 2 untergebracht ist. Auf einer Welle 5 ist ein Rotorblechpaket 4 drehfest mit der Welle 5 verbunden. Der mit dem Rotorblechpaket 4 gestaltete Rotor weist als Erregungsmittel entweder Permanentmagnete oder eine eigene elektrische Erregung auf, die über Schleifringe dem Wicklungssystem des Rotors zugeführt wird.

Aus Übersichtlichkeitsgründen wird jedoch nur das Wicklungssystem des Stators näher betrachtet. Das Wicklungssystem des Statorblechpakets 3 ist in nicht näher dargestellten Nuten angeordnet und an den Stirnseiten des Statorblechpakets 3 ist ein Wickelkopf 8 auf der Antriebs-Seite, und ein Wickelkopf 9 auf der Nicht-Antriebsseite vorhanden. Ebenso sind aus Übersichtlichkeitsgründen die Meldeleitungen 10 zeichnerisch überdimensioniert auf den Wickelköpfen 8, 9 angeordnet; sie können selbstverständlich auch innerhalb des Wickelkopfes 8,9 und/oder in einer oder mehreren Nuten des Wicklungssystems verlaufen.

Die Meldeleitung 10 ist zwischen Leitern einer Phase und/oder zwischen Leiter und geerdetem Blechpaket und/oder zwischen den Leitern unterschiedlicher Phasen angeordnet.

Auf der Antriebsseite-Seite befindet sich am Wickelkopf 8 ein Schaltverbinder, der die Spulengruppen der gleichartigen elektrischen Phasen in Umfangsrichtung des Stators verteilt und miteinander elektrisch verbindet. Über ein Leistungskabel 18, das mit dem Umrichter 15 verbunden ist, wird die dynamoelektrische Maschine 1 gespeist.

Die Welle 5 stützt sich über Lager 12 und den jeweiligen Lagerschilden 6 und 7 am Gehäuse ab. Der Umrichter 15 erhält über ein elektrisches Versorgungsnetz 17 oder über einen Fahrdraht eine elektrische Spannung, die mittels Umrichter 15 der dynamoelektrischen Maschine 1 elektrisch angepasst werden und über das Leistungskabel 18 der dynamoelektrischen Maschine 1 bereitgestellt wird.

Die Meldeleitung 10 sind zwischen Umrichter 15 und dynamoelektrischer Maschine 1 entweder separat verlegt oder werden zusammen mit den Leistungskabeln in einer Kabelhülle der dynamoelektrischer Maschine 1 über einen dementsprechenden Stecker bereitgestellt. Dementsprechende Meldungen/Datenfolgen/ Auswertungen über Störungen im Wicklungssystem und damit des Betriebsablaufs können in einem Display 16 am Umrichter 15 und/oder in einem oder mehreren separaten Displays an verschiedenen Orten dargestellt werden.

Alternativ und/oder ergänzend dazu können die Daten auch einer Überwachungseinrichtung übermittelt werden, die automatisch weitere Aktionen einleitet, wie z.B. Abschalten eines Motors, Reduzieren der Leistung des Antriebs, etc.

Die Übermittlung der Daten zu den Displays und/oder der Überwachungseinrichtung kann sowohl leitungsgebunden als auch kabellos erfolgen.

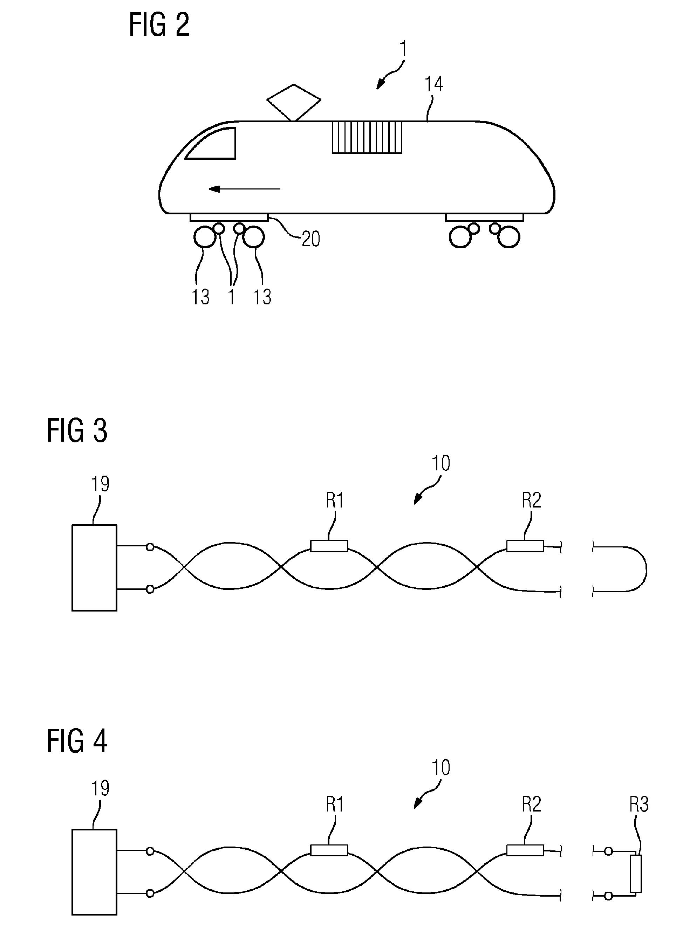

Die Anwendung einer derartigen dynamoelektrischen Maschine 1 bildet ein Antriebssystem, das Umrichter 15 und eine dynamoelektrischen Maschine 1 aufweist und das z.B. in einer Lok 14 gemäß FIG 2 angeordnet ist. Dabei weist die Lok 14 zwei Drehgestelle 20, mit jeweils zwei Radsatzwellen auf. Jede Radsatzwelle wird über eine dynamoelektrische Maschine 1 und einen zugehörigen Umrichter 15 angetrieben.

Die Messung des Zustands der Meldeleitung 10 und damit des Zustandes des jeweiligen Wicklungssystems bzw. Wickelkopfes 8, 9 erfolgt beispielsweise durch geeignete Testsignale des jeweiligen Umrichters 15. Die Signale können sowohl bei Fahrt wie auch im Stillstand eines Fahrzeugs erzeugt und ausgewertet werden. Eine Auswertung der Messergebnisse erfolgt direkt in der Lok 14 und kann dem Lokführer, dem Zugführer oder einer zentralen Überwachungseinrichtung außerhalb der Lok bzw. des Zuges übermittelt werden.

Die Anwendung des erfindungsgemäßen Gedankens ist natürlich nicht alleine auf Loks 14 beschränkt, vielmehr erstreckt sie sich auf alle elektrisch angetriebenen Fahrzeuge wie Mining-Trucks Straßenbahnen, e-cars, e-aircraft-Anwendungen etc.

Die Meldeleitung 10 ist gemäß FIG 3 beispielsweise als verdrillt isoliertes Kabel ausgeführt, wobei um eine örtliche Zuordnung des Wicklungskurzschluss vornehmen zu können, in vorgebbaren Abständen konzentrierte Widerstände R1, R2 etc. vorgesehen sind. Somit kann mit Beaufschlagung eingesetzter Signale - Gleichspannungssignale (DC) oder Wechselspannungssignale (AC bis in KHz Bereich) ein Wicklungskurzschluss erkannt werden. Über die Auswerteeinheit 19 kann so ein Wicklungskurzschluss örtlich innerhalb der dynamoelektrischen Maschine 1 bestimmt werden.

FIG 4 zeigt beispielhaft einen konkreten Abschluss einer verdrillt isolierten Meldeleitung 10 in Form eines vorgegebenen Widerstandes R3.

## Patentansprüche

1. Dynamoelektrische Maschine (1) mit einem Statorblechpaket (3) und einem Rotorblechpaket (4), wobei das Statorblechpaket(3) und/oder das Rotorblechpaket (4) jeweils ein oder mehrere Wicklungssysteme aufweist, das an den jeweiligen Stirnseiten des Statorblechpakets (3) und/oder des Rotorblechpakets (4) einen Wickelkopf (8,9) ausbildet, wobei im Wicklungssystem, insbesondere im oder am Wickelkopf (8,9) zumindest eine Meldeleitung (10) vorgesehen ist, um Wicklungskurzschlüsse zu erfassen.

2. Dynamoelektrische Maschine (1) nach Anspruch 1, **dadurch gekennzeichnet, dass** die Meldeleitung (10) mittels zweier verdrillter voneinander isolierten Drähten gebildet ist.

3. Dynamoelektrische Maschine (1) nach Anspruch 1, **dadurch gekennzeichnet, dass** die Meldeleitung (10) als Koaxialkabel ausgeführt ist, wobei sich insbesondere zwischen Innen- und Außenleiter des Koaxialkabels eine temperaturempfindliche Isolation befindet.

4. Dynamoelektrische Maschine (1) nach Anspruch 1, **dadurch gekennzeichnet, dass** die Meldeleitung (10) aus unisoliertem Metalldraht mit vergleichsweise niederem Schmelzpunkt, wie Blei oder Zink, besteht.

5. Dynamoelektrische Maschine (1) nach einem der vorhergehenden Ansprüche, **dadurch gekennzeichnet, dass** die Isolation temperaturempfindlich ausgeführt ist, derart, dass der Schmelzpunkt dieser Isolation bzw. des Drahtes ca. 30 Kelwin der Temperaturklasse der dynamoelektrischen Maschine (1) liegt.

6. Antriebssystem mit zumindest einem Umrichter (15) und zumindest einer dynamoelektrischen Maschine nach einem der vorhergehenden Ansprüche 1 bis 5, **dadurch gekennzeichnet, dass** die Meldeleitung (10) in den Umrichter (15) geführt ist, und dort in ein Auswertesystem (19) integriert ist.

7. Antriebssystem nach Anspruch 6, **dadurch gekennzeichnet, dass** die Meldeleitung in ein Leistungskabel (18) integriert ist, das Umrichter (15) und dynamoelektrische Maschine (1) verbindet.

8. Elektrisch angetriebenes Fahrzeug mit zumindest einem Antriebssystem nach Anspruch 6 oder 7.

9. Verfahren zur Bestimmung eines Wicklungskurzschlusses einer dynamoelektrischen Maschine (1) mit einem Statorblechpaket (3) und einem Rotorblechpaket (4), wobei das Statorblechpaket(3) und/oder das Rotorblechpaket (4) jeweils ein oder mehrere Wicklungssysteme aufweist, das an den jeweiligen Stirnseiten des Statorblechpakets (3) und/oder des Rotorblechpakets (4) einen Wickelkopf (8,9) ausbildet, wobei im Wicklungssystem, insbesondere im oder am Wickelkopf (8,9) zumindest eine Meldeleitung (10) vorgesehen ist, um Wicklungskurzschlüsse zu erfassen durch folgende Schritte:
- Beaufschlagung eines geeigneten Messsignals auf die Messleitungen (10),
- Auswertung und/oder Darstellung der Rücklaufsignale direkt an der dynamoelektrischen Maschine (1) und/oder über Display (16) an einem Umrichter 15 und/oder einem oder mehreren separaten Displays.
